# EUROPEAN PATENT APPLICATION

(11) **EP 4 738 483 A1**
(43) Date of publication of application: **06.05.2026**
(21) Application number: 24831615.0
(22) Date of filing: 06.06.2024
(51) Int. Cl.: H01M 6/16, H01M 4/40

(54) **LITHIUM PRIMARY BATTERY**

(30) Priority: 29.06.2023 JP 2023107272
(71) Applicant: Panasonic Intellectual Property Management Co., Ltd., Kadoma-shi, Osaka 571-0057 (JP)
(72) Inventor: ANDO, Keita, Kadoma-shi, Osaka 571-0057 (JP); ASANO, Yuya, Kadoma-shi, Osaka 571-0057 (JP)
(74) Representative: Novagraaf International SA
(86) International application number: PCT/JP2024/020756
(87) International publication number: WO 2025/004745

(57) **Abstract**

A lithium primary battery including a wound electrode group, and a nonaqueous electrolyte solution. The electrode group includes a positive electrode having a belt shape, and a negative electrode having a belt shape, which are spirally wound with a separator disposed between the positive electrode and the negative electrode. The positive electrode contains both manganese dioxide and fluorinated graphite. The negative electrode includes a lithium alloy. The lithium alloy contains magnesium, and the content of the magnesium in the lithium alloy is 0.01 mass% or more and 11 mass% or less.

## Description

### [Technical Field]

The present disclosure relates to a lithium primary battery.

### [Background Art]

Lithium primary batteries have high energy density and low self-discharge, and are therefore used as power sources for many electronic devices. A wound electrode group of a lithium primary battery is configured by spirally winding a positive electrode having a belt shape, a negative electrode having a belt shape, and a separator disposed between the positive electrode and the negative electrode. For a negative electrode of lithium primary batteries, for example, lithium metal or lithium alloy in the form of sheet (foil) is used.

Patent Literature 1 proposes "a nonaqueous electrolyte solution battery, comprising: a positive electrode including, as an active material, a mixture of manganese dioxide and fluorinated graphite; a negative electrode including, as a negative electrode material, metal lithium, or a material capable of absorbing and releasing lithium ions; and a nonaqueous electrolyte solution, wherein the fluorinated graphite is represented by a formula (CFx)n, where 1.2 ≤ x ≤ 1.4, and its weight ratio in the mixture is 0.1 to 4%".

Patent Literature 2 proposes "a lithium battery, comprising: a positive electrode containing manganese dioxide, as a positive electrode active material; a negative electrode containing at least one of lithium metal and a lithium alloy, as a negative electrode active material; a porous insulator disposed between the positive electrode and the negative electrode; and an organic electrolyte, wherein the organic electrolyte contains a hydroxycarboxylic acid ester in an amount of 0.001 to 1 wt%".

Patent Literature 2 discloses that "as the negative electrode active material, at least one of lithium metal and a lithium alloy is used. The lithium alloy may be, for example, an alloy of lithium and at least one metal selected from the group consisting of aluminum, tin, magnesium, indium, and calcium. The content of the metals other than lithium in the lithium alloy is preferably 0.1 to 3 wt%" ([0034]).

### [Citation List]

### [Patent Literature]

Patent Literature 1: Japanese Laid-Open Patent Publication No. H7-50165
Patent Literature 2: Japanese Laid-Open Patent Publication No. 2011-60655

### [Summary of Invention]

### [Technical Problem]

Patent Literature 1 discloses that, when fluorinated graphite is mixed with manganese dioxide, a reaction product generated through the reaction between the manganese dioxide and the nonaqueous electrolyte solution will be captured by the fluorinated graphite, and thus, the reaction (self-discharge) of the reaction product with lithium on the negative electrode side becomes unlikely to occur ([0012]).

However, fluorinated graphite has a larger theoretical capacity than manganese dioxide. Therefore, the positive electrode capacity increases when manganese dioxide is mixed with fluorinated graphite. As a result, in a lithium primary battery in which metal lithium or lithium alloy in the form of sheet (foil) is used as a negative electrode, part of the negative electrode may be chipped or fractured in the end stage of discharge, and the discharge performance may degrade in some cases. One possible solution would be to change the capacity balance between the positive and negative electrodes, but rather, it is desirable to increase the overall battery capacity without causing the discharge performance to degrade.

### [Solution to Problem]

One aspect of the present disclosure relates to a lithium primary battery, including: a wound electrode group; and a nonaqueous electrolyte solution, wherein the electrode group includes a positive electrode having a belt shape, and a negative electrode having a belt shape, which are spirally wound with a separator disposed between the positive electrode and the negative electrode, the positive electrode contains both manganese dioxide and fluorinated graphite, the negative electrode includes a lithium alloy, the lithium alloy contains magnesium, and a content of the magnesium in the lithium alloy is 0.01 mass% or more and 11 mass% or less.

### [Advantageous Effects of Invention]

According to the present disclosure, it is possible to improve the discharge performance in a lithium primary battery.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

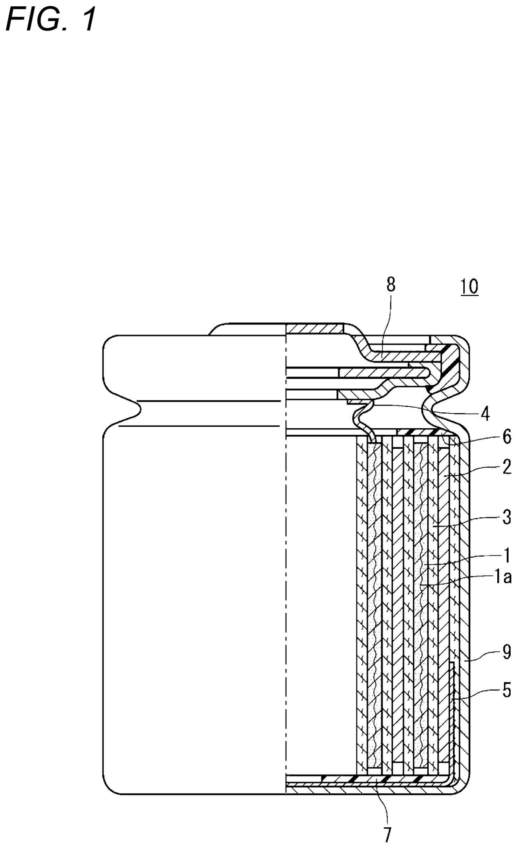

[FIG. 1] A front view, partially in section, of a lithium primary battery according to an embodiment of the present invention.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

A lithium primary battery according to an embodiment of the present disclosure includes a wound electrode group, and a nonaqueous electrolyte solution. The electrode group is constituted by spirally winding a positive electrode having a belt shape, a negative electrode having a belt shape, and a separator disposed between the positive electrode and the negative electrode. The negative electrode may be disposed at the outermost layer of the electrode group. The positive electrode may be disposed at the innermost layer of the electrode group.

The positive electrode contains, as a positive electrode active material, both manganese dioxide and fluorinated graphite. The theoretical capacity per mass of the manganese dioxide is about 308 mAh/g, and the theoretical capacity per mass of the fluorinated graphite is about 864 mAh/g. Therefore, the larger the proportion of the fluorinated graphite in the total mass of the manganese dioxide and the fluorinated graphite is, the more the capacity per mass of the positive electrode active material improves.

On the other hand, the operating voltage of fluorinated graphite is lower than that of manganese dioxide, and in terms of pulse discharge characteristics, too, manganese dioxide is superior. Therefore, to obtain a battery with high operating voltage and excellent pulse discharge characteristics, it is preferable, on the precondition of using manganese dioxide, to replace part of the manganese dioxide with fluorinated graphite.

The proportion of the fluorinated graphite in the total mass of the manganese dioxide and the fluorinated graphite is, for example, preferably 0.1 mass% or more and 10 mass% or less, more preferably 0.1 mass% or more and 5 mass% or less.

The negative electrode includes a lithium alloy as a negative electrode active material. The negative electrode may be constituted of a lithium alloy in the form of sheet (foil), and may not include a negative electrode current collector. When the positive electrode capacity is increased, part of the lithium alloy in the form of sheet (foil) may be chipped or fractured in the end stage of discharge, and the discharge performance may degrade in some cases. On the other hand, when the capacity balance between the positive electrode and the negative electrode is changed, the merit obtained by increasing the positive electrode capacity may be impaired, or the amount to be used of lithium, which is expensive, may increase.

On the other hand, when a lithium alloy containing magnesium (Mg) is used for the negative electrode, and the Mg content in the lithium alloy is set to 0.01 mass% or more and 11 mass% or less, the phenomenon in which part of the lithium alloy in the form of sheet is chipped or fractured in the end stage of discharge is significantly reduced. In the case of using a lithium alloy containing Mg at a ratio as above, the lithium (Li) consumption reaction at the negative electrode proceeds uniformly throughout the negative electrode during the battery discharge process. Therefore, in the end stage of discharge, the lithium alloy containing Mg is likely to remain in the form of thin foil (sheet), so that the chipping or fracture of part of the negative electrode is suppressed, and the discharge performance is maintained. Thus, the overall battery capacity can be improved without degrading the discharge performance.

When the Mg content is less than 0.01 mass%, such an effect is not fully exerted, and the discharge performance may degrade due to the negative electrode. When the Mg content exceeds 11 mass%, no further improvement in discharge performance can be expected. Moreover, when the Mg content is too high, due to the decreased proportion of Li, it becomes difficult to improve the overall battery capacity.

From the viewpoint of more reliably increasing the amount of the Li that can contribute to the discharge reaction in the end stage of discharge, the Mg content in the lithium alloy may be 0.02 mass% or more, may be 0.05 mass% or more, and is preferably 0.1 mass% or more. From the viewpoint of ensuring a higher proportion of Li in the negative electrode, the Mg content in the lithium alloy may be 7 mass% or less, may be 5 mass% or less, may be 2 mass% or less, and is preferably 1 mass% or less.

The lithium alloy containing Mg may further contain aluminum. When the lithium alloy contains Al, a coating whose resistance is low is formed on the surface of the negative electrode. Therefore, the lithium alloy preferably contains Al. With a lithium alloy containing both Mg and Al, a coating with low resistance is formed on its surface, and the output voltage can be increased, as compared to with lithium metal or a lithium alloy containing only one of Mg and Al.

When the lithium alloy contains Al alone, uneven Li consumption due to Al segregation can occur. However, when the lithium alloy containing Mg contains Al, such a phenomenon is suppressed. Therefore, the effects by Mg and Al are stably exerted throughout the negative electrode. As a result, the proportion of the Li that can contribute to the discharge reaction in the end stage of discharge increases.

Hereinafter, a lithium alloy containing Mg and being substantially free of Al will be sometimes referred to as a "Li-Mg alloy". A lithium alloy containing Mg and Al will be sometimes referred to as a "Li-Mg-Al alloy". Note that "being substantially free of Al" means that the Al content is below the detection limit in a compositional analysis of the lithium alloy (e.g., ICP atomic emission spectroscopy, atomic absorption spectroscopy, etc.).

In the case of a Li-Mg-Al alloy, the Al content in the lithium alloy is, for example, 0.01 mass% or more, may be 0.02 mass% or more, may be 0.05 mass% or more, and may be 0.1 mass% or more. From the viewpoint of ensuring a higher proportion of Li in the negative electrode and ensuring the ease of winding of the negative electrode, the Al content in the lithium alloy is, for example, preferably 0.5 mass% or less, more preferably 0.3 mass% or less.

In the case of a Li-Mg-Al alloy, the total content of Mg and Al in the lithium alloy is, for example, 0.02 mass% or more and 11.5 mass% or less, may be 0.03 mass% or more and 5.5 mass% or less, may be 0.11 mass% or more and 1.5 mass% or less, and may be 0.2 mass% or more and 1.3 mass% or less.

The mass ratio Mg/Al of Mg to Al may be, for example, 0.2 or more and 50 or less.

The lithium alloy may contain, in addition to Mg and Al, one or more metal elements capable of forming an alloy with lithium. Examples of the metal capable of forming an alloy with lithium include Na, Ca, Sn, Ni, Pb, In, K, Fe, and Si, but are not limited thereto. However, from the viewpoint of ensuring the discharge capacity and stabilizing the internal resistance, the total content of the metal elements other than lithium contained in the lithium alloy is preferably 15 mass% or less or 11 mass% or less. That is, the Li content in the lithium alloy used for the negative electrode is preferably 85 mass% or more or 89 mass% or more, more preferably 95 mass% or more.

The composition of the lithium alloy can be determined by inductively coupled plasma (ICP) atomic emission spectroscopy or atomic absorption spectroscopy (AAS).

The lithium primary battery of the present disclosure will be described in more detail below.

### [Lithium primary battery]

### (Positive electrode)

The positive electrode contains, as a positive electrode active material, both manganese dioxide and fluorinated graphite. Manganese dioxide has high operating voltage and is excellent in output characteristics and discharge characteristics (pulse discharge characteristics). On the other hand, fluorinated graphite has higher capacity than manganese dioxide. By using both in combination, a lithium primary battery having high capacity and excellent output characteristics can be obtained.

The manganese dioxide may be an electrolytic manganese dioxide. The manganese dioxide may be in a mixed crystal state containing multiple crystalline states. The positive electrode may contain a manganese oxide other than manganese dioxide. It suffices when the major component of the manganese oxide contained in the positive electrode is manganese dioxide, and the proportion of the manganese dioxide in the manganese oxide may be 50 mass% or more, may be 70 mass% or more, and may be 90 mass% or more. Examples of the manganese oxide other than manganese dioxide include MnO, Mn₃O₄, Mn₂O₃, and Mn₂O₇. The particle diameter D₅₀ of the manganese dioxide at a volume fraction of 50% in a volume-cumulative particle size distribution is, for example, 30 µm to 60 µm.

Fluorinated graphite can be obtained by, for example, fluorinating a carbon material including a graphite structure. The fluorination proceeds when the carbon material is heated together with fluorine gas. The particle diameter D₅₀ of the fluorinated graphite at a volume fraction of 50% in a volume-cumulative particle size distribution is, for example, 10 µm to 30 µm. The fluorinated graphite can be expressed as (CFₓ)ₙ. In the formula, x is, for example, 0.4 ≤ x ≤ 1.15, and may be 0.5 to 1.1.

The positive electrode may include a positive electrode mixture containing a positive electrode active material, a binder, a conductive agent, and the like. Examples of the binder include fluorocarbon resins such as polytetrafluoroethylene, rubber particles, and acrylic resins. Examples of the conductive agent include conductive carbon materials. The conductive carbon materials include, for example, natural graphite, artificial graphite, carbon black, and carbon fibers.

The positive electrode can further include a positive electrode current collector that holds the positive electrode mixture. Examples of the material of the positive electrode current collector include stainless steel, aluminum, and titanium.

When the battery is of a cylindrical type, a positive electrode including a positive electrode current collector in the form of sheet and a positive electrode mixture layer held on the positive electrode current collector in the form of sheet can be used. As the positive electrode current collector in the form of sheet, a current collector with pores is preferred. Examples of the current collector with pores include expanded metal, net, and punched metal. The positive electrode mixture layer can be obtained by, for example, applying or packing a wet-state positive electrode mixture onto a surface of a positive electrode current collector in the form of sheet or into the positive electrode current collector, and applying pressure thereto in the thickness direction, followed by drying.

### (Negative electrode)

The negative electrode includes the above-described lithium alloy. The lithium alloy is formed into desired shape and thickness, depending on the shape, size, and specified performance of the lithium primary battery.

When the battery is of a cylindrical type, a lithium alloy in the form of foil (sheet) may be used as the negative electrode. The sheet can be obtained by, for example, extrusion molding. Specifically, in the cylindrical battery, a lithium alloy foil having a shape with longitudinal and lateral directions can be used.

The negative electrode may include a negative electrode current collector (e.g., copper foil) supporting the lithium alloy. However, the negative electrode can be constituted without using a negative electrode current collector, by using only a lithium alloy in the form of foil (sheet), because the lithium alloy contains Mg, and the Mg, which has relatively high strength, can remain thinly in the form of foil (sheet) in the end stage of discharge.

### (Nonaqueous electrolyte solution)

The nonaqueous electrolyte solution contains a nonaqueous solvent and a lithium salt. The concentration of lithium ions (concentration of lithium salt) in the nonaqueous electrolyte solution is, for example, 0.2 mol/L or more and 2.0 mol/L or less, and may be 0.3 mol/L or more and 1.5 mol/L or less.

As the nonaqueous solvent, an organic solvent that can be generally used in the nonaqueous electrolyte solution for a lithium primary battery can be used. Specifically, an ether, an ester, a carbonic acid ester, and the like can be used. More specifically, dimethyl ether, γ-butyrolactone, propylene carbonate (PC), ethylene carbonate (EC), dimethyl carbonate, diethyl carbonate, ethyl methyl carbonate, 1,2-dimethoxyethane (DME), 1,2-diethoxyethane, methyl acetate, ethyl acetate, propyl acetate, and the like can be used. The nonaqueous solvent may be used singly, or in combination of two or more kinds.

From the viewpoint of improving the discharge characteristics of the lithium primary battery, the nonaqueous solvent preferably contains a cyclic carbonic acid ester whose boiling point is high, and a chain ether which exhibits low viscosity even at low temperatures. The cyclic carbonic acid ester preferably includes at least one selected from the group consisting of PC and EC, of which PC is particularly preferred. The chain ether preferably includes DME.

As the lithium salt, for example, a lithium salt that can be used as a solute in a lithium primary battery can be used. Specifically, LiCF₃SO₃, LiClO₄, LiBF₄, LiPF₆, LiRaSO₃ where Ra is a fluorinated alkyl group having 1 to 4 carbon atoms, LiFSO₃, LiN(SO₂Rb)(SO₂Rc) where Rb and Rc are each independently a fluorinated alkyl group having 1 to 4 carbon atoms, LiN(FSO₂)₂, LiN(SO₂CF₃)₂, LiN(SO₂F)(POF₂), LiPO₂F₂, LiB(C₂O₄)₂, LiBF₂(C₂O₄), and the like can be used. In particular, at least one selected from the group consisting of LiCF₃SO₃, LiBF₄, and LiN(FSO₂)₂ is preferred from the viewpoint of the stability against the lithium alloy containing Al and Mg. The nonaqueous electrolyte solution may contain these lithium salts singly or in combination of two or more kinds.

The nonaqueous electrolyte solution may further contain an additive. Examples of the additive include propane sultone, propene sultone, ethylene sulfite, 3,2-dioxathiolane-2,2-dioxide, vinylene carbonate, vinylethylene carbonate, fluoroethylene carbonate, adiponitrile, succinonitrile, and succinic anhydride.

### (Separator)

The lithium primary battery usually includes a separator interposed between the positive electrode and the negative electrode. As the separator, a porous sheet formed of an electrically insulating material having tolerance against the internal environment of the lithium primary battery may be used. Specific examples thereof include a nonwoven fabric made of a synthetic resin, a microporous film made of a synthetic resin, and a laminate of them. The thickness of the separator is, for example, 5 µm or more and 100 µm or less.

Examples of the synthetic resin used for the nonwoven fabric include polypropylene, polyphenylene sulfide, and polybutylene terephthalate. Examples of the synthetic resin used for the microporous film include polyolefin resins, such as polyethylene, polypropylene, and ethylene-propylene copolymer. The microporous film may contain inorganic particles, as necessary.

### (Lithium primary battery)

FIG. 1 is a front view, partially in section, of a lithium primary battery according to one embodiment of the present invention. In a battery case 9 of a lithium primary battery 10, a wound electrode group and a nonaqueous electrolyte solution are housed. The electrode group is constituted by spirally winding a positive electrode 1 having a belt shape and a negative electrode 2 having a belt shape, with a separator 3 interposed therebetween. A sealing plate 8 is attached at the opening of the battery case 9. The positive electrode 1 includes a positive electrode current collector 1a, and a positive electrode mixture layer supported on one or both sides of the positive electrode current collector 1a. The positive electrode current collector 1a and the sealing plate 8 are connected to each other via a positive electrode lead 4. The negative electrode 2 includes at least a negative electrode alloy in the form of foil (or sheet). The negative electrode 2 and the battery case 9 are connected to each other via a negative electrode lead 5. On the upper and lower sides of the electrode group, an upper insulating plate 6 and a lower insulating plate 7 are respectively disposed, for internal short circuit prevention.

The structure and shape of the lithium primary battery are not particularly limited. The wound electrode group may be cylindrical or flat in shape. The shape of the lithium primary battery may be cylindrical or prismatic.

### <<Supplementary notes>>

The above description of embodiments discloses the following techniques.

### (Technique 1)

A lithium primary battery, comprising:
a wound electrode group; and a nonaqueous electrolyte solution, wherein
the electrode group includes a positive electrode having a belt shape, and a negative electrode having a belt shape, which are spirally wound with a separator disposed between the positive electrode and the negative electrode,
the positive electrode contains both manganese dioxide and fluorinated graphite,
the negative electrode includes a lithium alloy,
the lithium alloy contains magnesium, and
a content of the magnesium in the lithium alloy is 0.01 mass% or more and 11 mass% or less.

### (Technique 2)

The lithium primary battery according to technique 1, wherein a proportion of the fluorinated graphite in a total mass of the manganese dioxide and the fluorinated graphite is 0.1 mass% or more and 10 mass% or less.

### (Technique 3)

The lithium primary battery according to technique 1 or 2, wherein a proportion of the fluorinated graphite in a total mass of the manganese dioxide and the fluorinated graphite is 0.1 mass% or more and 5 mass% or less.

### (Technique 4)

The lithium primary battery according to any one of techniques 1 to 3, wherein the content of the magnesium in the lithium alloy is 0.1 mass% or more and 1 mass% or less.

### (Technique 5)

The lithium primary battery according to any one of techniques 1 to 4, wherein
the lithium alloy further contains aluminum, and
a content of the aluminum in the lithium alloy is 0.01 mass% or more and 0.5 mass% or less.

### (Technique 6)

The lithium primary battery according to any one of techniques 1 to 5, wherein the negative electrode is a foil of the lithium alloy, and does not include a negative electrode current collector.

### [Examples]

The present disclosure will be more specifically described below with reference to Examples and Comparative Examples. The present disclosure, however, is not limited to the following Examples.

### <<Examples 1 to 8 and Comparative Examples 1 to 8»

### (Production of positive electrode)

To 100 parts by mass of a positive electrode active material, 5 parts by mass of Ketjen black serving as a conductive agent, 5 parts by mass of polytetrafluoroethylene serving as a binder, and an appropriate amount of pure water were added, and kneaded together, to prepare a wet-state positive electrode mixture. The positive electrode active material used here was a mixture of electrolytic manganese dioxide and fluorinated graphite. The proportion of the fluorinated graphite in the total mass of the electrolytic manganese dioxide and the fluorinated graphite was set to 0.1 mass%, 1 mass%, 5 mass%, or 10 mass%.

Next, the positive electrode mixture was packed into a positive electrode current collector formed of a 0.1-mm-thick expanded metal made of stainless steel, to prepare a positive electrode precursor. Thereafter, the positive electrode precursor was dried, and rolled with a roll press, followed by cutting, to obtain a belt-shaped positive electrode. Subsequently, a part of the packed positive electrode mixture was peeled off, and one end of a positive electrode lead made of stainless steel was resistance-welded to the exposed part of the positive electrode current collector.

The mass of the positive electrode mixture contained in the positive electrode, and the width and length of the positive electrode were set the same for all the batteries as follows.
Mass of positive electrode mixture 9.7 g
Width of positive electrode 38 mm
Length of positive electrode 190 mm

When the positive electrode active material is entirely electrolytic manganese dioxide, the thickness of the positive electrode is 0.51 mm, and the theoretical capacity of the positive electrode is 2420 mAh. When 1 mass% of the positive electrode active material is replaced with fluorinated graphite from electrolytic manganese dioxide, the increased amount of capacity is 49.0 mAh.

### (Production of negative electrode)

The following lithium metal foil and lithium alloy foil were prepared as a negative electrode. The thickness of the negative electrode was 0.21 mm in the case of a pure lithium alloy foil. The thickness of the negative electrode containing Mg and/or Al was increased, accordingly to the addition of Mg and/or Al.

Batteries B1 to B4: pure lithium foil
Batteries B5 to B8: lithium alloy without Mg and containing 0.3 mass% Al (Li-Al0.3)
Batteries A1 to A4: lithium alloy without Al and containing 0.3 mass% Mg (Li-Mg0.3)
Batteries A5 to A8: lithium alloy containing 0.1 mass% Al and 0.3 mass% Mg (Li-Al0.1-Mg0.3)

The mass of Li contained in the negative electrode, and the width and length of the negative electrode were set the same for all the batteries as follows. The thickness of the negative electrode was 0.21 mm to 0.24 mm.
Mass of Li 0.80 g
Width of negative electrode 34 mm
Length of negative electrode 210 mm

A negative electrode lead made of nickel was pressure-welded to an end of the lithium alloy foil. An adhesive tape made of synthetic resin was attached so as to cover the entire negative electrode lead except its tip end.

### (Formation of electrode group)

A belt-shaped separator of a predetermined size was prepared. For the separator, a 25-µm-thick polyethylene microporous film was used. With the separator disposed between the positive electrode and the negative electrode, they were spirally wound such that the positive electrode was on the inside. In this way, an electrode group including the negative electrode at its outermost layer was prepared. The tip end of the negative electrode lead was exposed from one end of the electrode group, and the tip end of the positive electrode lead was exposed from the other end of the electrode group.

### (Preparation of nonaqueous electrolyte solution)

LiCF₃SO₃ was dissolved at a concentration of 0.5 mol/L in a mixed solvent of PC, EC, and DME (volume ratio 3:2:5), to prepare a nonaqueous electrolyte solution.

### (Fabrication of lithium primary battery)

The electrode group was housed in a cylindrical battery case serving as a negative electrode terminal. For the battery case, an iron case (outer diameter 17 mm, height 45.5 mm) was used. Next, the nonaqueous electrolyte solution was injected into the battery case, and then, the opening of the battery case was closed with a sealing plate made of metal serving as a positive electrode terminal. The other end of the positive electrode lead was connected to the sealing plate, and the other end of the negative electrode lead was connected to the inner bottom surface of the battery case. In this manner, a lithium primary battery was fabricated.

Note that batteries A1 to A8 in the table are batteries of Examples 1 to 8. Batteries B1 to B8 are batteries of Comparative Examples 1 to 8.

**[Table 1]**

| negative electrode | proportion of fluorinated graphite in positive electrode active material (mass%) | | | |
|---|---|---|---|---|
| | 0.1 | 1.0 | 5.0 | 10.0 |
| Li | B1: 100 | B2: 100 | B3: 100 | B4: 100 |
| Li-Al0.3 | B5: 100 | B6: 99 | B7: 101 | B8: 101 |
| Li-Mg0.3 | A1: 110 | A2: 112 | A3: 123 | A4: 135 |
| Li-Al0.1-Mg0.3 | A5: 112 | A6: 113 | A7: 124 | A8: 136 |

With respect to each of the obtained batteries of Examples and Comparative Examples, aging for 7 days was performed in a 45 °C atmosphere after fabrication, and then the following evaluation was performed.

### [Evaluation]

With respect to the battery after aging, in a 20 °C environment, discharging was performed with a 1-kΩ resistor connected thereto until the voltage reached 2 V, to measure the discharge capacity. In each positive electrode composition, the discharge capacity is shown in Table 1, as a relative value when the discharge capacity of the batteries B1 to B4 including a pure lithium foil is taken as 100.

In Comparative Examples 5 to 8 including a Li-Al0.3 lithium alloy foil, no increase in discharge capacity was observed. In contrast, in Examples 1 to 8 including a Li-Mg0.3 or Li-Al0.1-Mg0.3 lithium alloy foil, the discharge capacity increased by 10% or more, and the increase became greater as the proportion of the fluorinated graphite increased. This tendency is unique to a lithium alloy containing Mg. In Examples 5 to 8 including a Li-Al0.1-Mg0.3 lithium alloy foil, the discharge capacity further increased because of an improvement effect (reduction of resistance) of the negative electrode coating by Al.

### <<Examples 9 to 24>>

Batteries A9 to A24 were fabricated and evaluated in the same manner as the batteries A1 to A4, except that the Li-Mg alloy composition was changed as follows. In each positive electrode composition and negative electrode composition, the discharge capacity is shown in Table 2, as a relative value when the discharge capacity of the batteries B1 to B4 including a pure lithium foil is taken as 100.

**[Table 2]**

| Mg content in negative electrode (mass%) | proportion of fluorinated graphite in positive electrode active material (mass%) | | | |
|---|---|---|---|---|
| | 0.1 | 1.0 | 5.0 | 10.0 |
| 0.01 | A9: 108 | A10: 110 | A11: 120 | A12: 132 |
| 0.10 | A13: 109 | A14: 111 | A15: 122 | A16: 133 |
| 0.30 | A1: 110 | A2: 112 | A3: 123 | A4: 135 |
| 1.00 | A17: 111 | A18: 113 | A19: 124 | A20: 136 |
| 11.00 | A21: 112 | A22: 114 | A23: 125 | A24: 137 |

The discharge capacity increased as the Mg content in the lithium alloy foil was increased. The discharge capacity increased as the proportion of the fluorinated graphite in the positive electrode active material was increased.

When only manganese dioxide was used as the positive electrode active material, the discharge capacity was smaller than in the batteries B1 to B4. When the Mg content in the lithium alloy foil was changed to 12 mass%, no increase in discharge capacity was observed, as compared to in the batteries 21 to 24. On the other hand, when the Mg content in the lithium alloy foil was changed to 12 mass%, the diameter of the electrode group was increased too large, and the battery fabrication failure increased.

In the above Examples, with respect to the Li-Mg-Al alloy, the Al content was fixed at 0.1 mass%, and the Mg content was fixed at 0.3 mass%. However, it has been confirmed that a similar tendency is observed when the Mg content is in the range of 0.01% to 11 mass%, and a similar tendency is observed when the Al content is in the range of 0.01% to 0.5 mass%.

### [Industrial Applicability]

The lithium primary battery of the present disclosure can be suitably used, for example, as a power source for an AED (automated external defibrillator), a main power source for various meters (e.g., smart meters for electricity, water, gas, etc.), and a memory backup power source.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: positive electrode, la: positive electrode current collector, 2: negative electrode, 3: separator, 4: positive electrode lead, 5: negative electrode lead, 6: upper insulating plate, 7: lower insulating plate, 8: sealing plate, 9: battery case, 10: lithium primary battery

## Claims

1. A lithium primary battery, comprising:
a wound electrode group; and a nonaqueous electrolyte solution, wherein
the electrode group includes a positive electrode having a belt shape, and a negative electrode having a belt shape, which are spirally wound with a separator disposed between the positive electrode and the negative electrode,
the positive electrode contains both manganese dioxide and fluorinated graphite,
the negative electrode includes a lithium alloy,
the lithium alloy contains magnesium, and
a content of the magnesium in the lithium alloy is 0.01 mass% or more and 11 mass% or less.

2. The lithium primary battery according to claim 1, wherein a proportion of the fluorinated graphite in a total mass of the manganese dioxide and the fluorinated graphite is 0.1 mass% or more and 10 mass% or less.

3. The lithium primary battery according to claim 1, wherein a proportion of the fluorinated graphite in a total mass of the manganese dioxide and the fluorinated graphite is 0.1 mass% or more and 5 mass% or less.

4. The lithium primary battery according to any one of claims 1 to 3, wherein the content of the magnesium in the lithium alloy is 0.1 mass% or more and 1 mass% or less.

5. The lithium primary battery according to any one of claims 1 to 3, wherein
the lithium alloy further contains aluminum, and
a content of the aluminum in the lithium alloy is 0.01 mass% or more and 0.5 mass% or less.

6. The lithium primary battery according to any one of claims 1 to 3, wherein the negative electrode is a foil of the lithium alloy, and does not include a negative electrode current collector.
